# EUROPÄISCHE PATENTSCHRIFT

(11) **EP 1 585 897 B1**
(45) Veröffentlichungstag und Bekanntmachung des Hinweises auf die Patenterteilung: **06.06.2007**
(21) Anmeldenummer: 04702700.8
(22) Anmeldetag: 16.01.2004
(51) Int. Cl.: F02M 1/00

(54) **EINSPRITZANLAGE FÜR VERBRENNUNGSMOTOR**
INJECTION UNIT FOR AN INTERNAL COMBUSTION ENGINE
SYSTEME D'INJECTION POUR MOTEUR A COMBUSTION INTERNE

(30) Priorität: 23.01.2003 DE 10302729
(43) Veröffentlichungstag der Anmeldung: 19.10.2005
(73) Patentinhaber: WEIHER, Thomas, 27578 Bremerhaven (DE)
(72) Erfinder: GURIN, Viktor, Nowouralsk 624139 (RU)
(74) Vertreter: Hansen, Jochen
(86) Internationale Anmeldenummer: PCT/EP2004/000304
(87) Internationale Veröffentlichungsnummer: WO 2004/065779

(56) Entgegenhaltungen:
- DE-A- 10 045 110
- DE-C- 863 431
- FR-A- 2 582 733

## Beschreibung

Die vorliegende Erfindung betrifft ein Verfahren zum Einspritzen von Kraftstoff in einen Verbrennungsmotor, wobei der Kraftstoff zunächst in einer Gasanreicherungsvorrichtung mit einem Gas oder Gasgemisch, insbesondere Sauerstoff oder Luft, angereichert wird, indem der Kraftstoff zerstäubt wird und das Gas/Gasgemisch dem zerstäubten Kraftstoff zugeführt wird, wobei anschließend der angereicherte Kraftstoff direkt in den Zylinder oder indirekt in einen vorgelagerten Bereich, insbesondere in den Ansaugtrakt des Motors im Wege einer abschließenden Zerstäubung eingespritzt wird.

Die vorliegende Erfindung betrifft darüber hinaus eine Einspritzanlage für einen Verbrennungsmotor zur Durchführung des obigen Verfahrens, mit einer Gasanreicherungsvorrichtung, die einen Raum aufweist zur Anreicherung von Kraftstoff mit einem Gas oder einem Gasgemisch, insbesondere Sauerstoff oder Luft, mit zumindest einem Zerstäubungsmittel sowie zumindest einer Öffnung für einen Gaseinlass, mit zumindest einem Pumpmittel zum Zuführen des Kraftstoffs und zum Zuführen des Gas/Gasgemischs in den Anreicherungsraum, mit einer Zuführleitung zum Leiten des angereicherten Kraftstoffs von der Gasanreicherungsvorrichtung zu einem Endzerstäubungsmittel, wobei das Endzerstäubungsmittel zum nachfolgenden, direkten oder indirekten Einspritzen des angereicherten Kraftstoffs in einen Zylinder oder einen vorgelagerten Bereich, insbesondere einen Ansaugtrakt, vorgesehen ist.

Bei einem derartigen Verfahren wird also der Kraftstoff, der im Wege einer üblichen direkten oder indirekten Einspritzung unmittelbar vor der Verbrennung mittels einer Düse so fein wie möglich zerstäubt wird, um eine möglichst optimale Gemischbildung mit der im Brennraum oder davor zugeführten Luft zu garantieren, vor dieser Zerstäubung bereits einmal zerstäubt und mit einem Gas wie etwa Sauerstoff angereichert.

DE 100 45 110 A offenbart ein solches Einspritzsystem mit Luftanreicherung des Kraftstoffs.

Wenn dann dieser angereicherte Kraftstoff in üblicher Weise beispielsweise in den Ansaugtrakt oder direkt in den Zylinder eines Motors eingespritzt wird, d. h. erneut zerstäubt wird, tritt das im Kraftstoff enthaltene Gas aus und sorgt durch dieses "Entgasen" für eine gegenüber der Zerstäubung von unangereichertem Kraftstoff verbesserte Zerkleinerung bzw. Zerstäubung der Mikro- und Makro-Kraftstofftröpfchen sowie für eine homogenere Gemischbildung des Kraftstoffes mit der zusätzlich zugeführten Luft.

Bekanntermaßen werden Inhomogenitäten des Luft/Kraftstoffgemisches desto stärker reduziert, je kleiner die Kraftstofftropfen sind. Durch die vorherige Anreicherung des Kraftstoffes mit einem Gas im Wege einer Vorzerstäubung wird also beim eigentlichen Einspritzvorgang die Wirkung der nachfolgenden abschließenden Zerstäubung durch die dabei ablaufende Entgasung erhöht. Durch das beschriebene Einspritzverfahren wird also unter anderem auf Grund der Reduktion der Inhomogenitäten im Verbrennungsgemisch eine bessere Verbrennung erzielt und damit der Kraftstoffverbrauch reduziert.

Es ist ein primäres Ziel der Motorenentwicklung, weitere Verbrauchsreduktionen zu erzielen. Aufgabe der vorliegenden Erfindung ist es daher, das oben beschriebene Einspritzverfahren und die oben beschriebene Einspritzanlage dahingehend zu verbessern, dass weitere Einsparpotentiale im Kraftstoffverbrauch eröffnet werden.

Diese Aufgabe wird zum einen gelöst durch ein Einspritzverfahren gemäß Anspruch 1.

Erfindungsgemäß wird also der Kraftstoff zumindest im angereicherten Zustand bis zum abschließenden Zerstäuben gekühlt, sodass einem Austritt des Gas/Gasgemischs aus dem Kraftstoff vor diesem abschließenden Zerstäuben, d. h. einer vorzeitigen Entgasung entgegengewirkt wird. Es wird also gewährleistet, das der größte Teil des aufgenommenen Gases/Gasgemisches in dem Kraftstoff verbleibt und erst beim abschließenden Zerstäuben austritt.

Der Kraftstoffverbrauch kann dadurch je nach Art des Motors, der mit der erfindungsgemäßen Einspritzanlage versehen wird, um bis zu 25 % im Vergleich zur Basisvariante des Motors gesenkt werden, das heißt im Vergleich zu dem Motor ohne das erfindungsgemäße Einspritzverfahren. Gleichzeitig wird der Kohlenstoffoxidgehalt um bis zu 5,6 % gesenkt.

Durch Versuche wurde gefunden, dass es besonders günstig ist, wenn die Temperatur des angereicherten Kraftstoffs beim Einspritzen 1 bis 10 °C, vorteilhaft 1 bis 3 °C beträgt.

Die gleichen Intervalle, d. h. 1 bis 10 °C, vorteilhaft 1 bis 3 °C, gelten auch für die Temperatur, die der angereicherte Kraftstoff im gesamten Verlauf haben sollte, d.h. in der Gasanreicherungsvorrichtung und auf dem Weg von dieser Gasanreicherungsvorrichtung bis zur abschließenden Zerstäubung.

In besonders effektiver Weise verläuft die zweite, abschließende Zerstäubung, wenn der Gasdruck beim Anreichern des Kraftstoffs bei der ersten Zerstäubung höher ist als der Luftdruck im.vorgelagerten Bereich bzw. im Zylinder beim endgültigen Einspritzvorgang, d. h. bei der zweiten Zerstäubung. Denn dies führt zu einem besonders effektiven Freiwerden des Gases aus der Lösung in jedem elementaren Kraftstoffvolumen.

Wie schon eingangs erläutert, werden die Mikro- und Makrotropfen des Kraftstoffes zusätzlich zu der üblichen Düsenzerstäubung weiter zerkleinert, da diese durch das Freiwerden des überschüssigen Gases dispergiert werden. Durch die enorme Zerkleinerung der Kraftstoffteilchen bzw. Kraftstofftröpfchen erhöht sich der Homogenisierungsgrad des Kraftstoff-Luftgemisches im Zylinder (direkte Einspritzung) bzw. im vorgelagerten Bereich (indirekte Einspritzung), beispielsweise im Ansaugtrakt.

Dadurch ergibt sich eine gleichmäßigere, schnellere und vollständigere Kraftstoffverbrennung im gesamten Brennkammervolumen gegenüber den Standardmotoren ohne die erfindungsgemäße Einspritzanlage, d. h. mit den Standardeinspritzverfahren bzw. Standardeinspritzanlagen. Wenn das Gas/Gasgemisch Sauerstoff oder Luft ist, nimmt der frei werdende Sauerstoff neben der auf übliche Weise zugeführten Luft zusätzlich an der Verbrennung teil bzw. wird ein Bestandteil des Kraft-Luft-Gemisches im Zylinder bzw. im vorgelagerten Bereich.

Es wurde gefunden, dass vorteilhafterweise der Gasdruck beim Anreichern des Kraftstoffs bei der ersten Zerstäubung 1,2 bis 50 mal so hoch ist wie der Luftdruck im vorgelagerten Bereich bzw. im Zylinder beim endgültigen Einspritzvorgang.

Die erfindungsgemäße Aufgabe wird auch gelöst durch eine Einspritzanlage für einen Verbrennungsmotor gemäß Anspruch 6 zur Durchführung des obigen Verfahrens.

Danach ist ein Kühlsystem vorgesehen, derart, dass zumindest der angereicherte Kraftstoff bis zum abschließenden Zerstäuben im Endzerstäubungsmittel gekühlt ist, sodass einem Austritt des Gas/Gasgemischs aus dem Kraftstoff vor diesem abschließenden Zerstäuben entgegengewirkt wird.

Das Kühlsystem der Einspritzanlage kann so ausgebildet sein, dass es sowohl den angereicherten Kraftstoff kühlt, als auch die gesamte Gasanreicherungsvorrichtung und die Zuführleitung. Dann wird der Entgasung des Kraftstoffs äußerst effektiv entgegengewirkt.

Weitere Merkmale der vorliegenden Erfindung ergeben sich sowohl aus den beigefügten Unteransprüchen als auch aus der Beschreibung eines konkreten Ausführungsbeispiels sowie aus der Zeichnung zu diesem Ausführungsbeispiel.

Dabei zeigt:

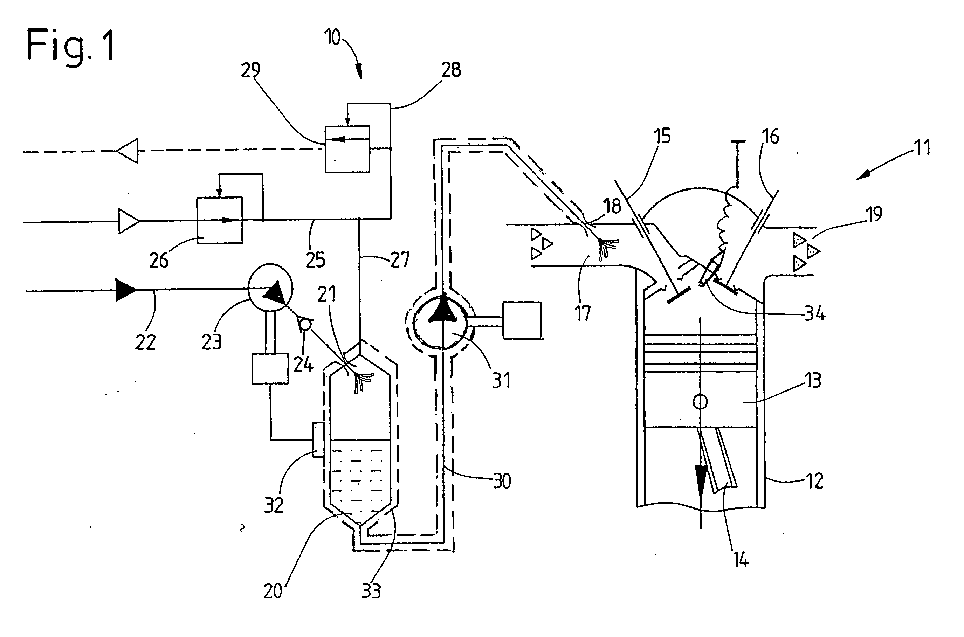

- Fig. 1: eine Prinzipskizze einer erfindungsgemäßen Einspritzanlage.

Im linken Bereich der Fig. 1 ist eine Einspritzanlage 10 gezeigt, die in erfindungsgemäßer Weise Kraftstoff, beispielsweise Diesel oder Benzin, je nach Motorenart, einem Verbrennungsbereich 11 zuführt. Der Verbrennungsbereich 11 besteht dabei aus einem Zylinder 12, in dem sich ein Kolben 13 über ein Pleuelstange 14 nach oben und unten bewegt. Ein Einlassventil 15 und ein Auslassventil 16 sorgen in im Stand der Technik bekannter Weise für den Einlass eines Kraftstoff/Luft-Gemisches und den Auslass desselben nach der Verbrennung.

In einer Ansaugsammelleitung 17 wird Luft zur Bildung des Kraftstoff/Luft-Gemisches zugeführt. In diese Sammelleitung 17 wird über eine Düse 18 mit Luft oder Gas angereicherter Kraftstoff mit Hochdruck eingespritzt. Die dabei an der Düse eingesetzten Drücke werden hier nicht weiter beschrieben, sie sind dem Fachmann bekannt.

Eine Abgasleitung 19 führt das im Zylinder 12 durch eine Zündkerze 34 gezündete und anschließend verbrannte Kraftstoff/Luft-Gemisch aus dem Motorraum heraus.

Die Einspritzanlage 10 weist eine Gasanreicherungsvorrichtung mit einer gas- und flüssigkeitsdichten, abgeschlossenen Kammer 20 auf, in die über eine Zerstäubungsdüse 21 Kraftstoff eingespritzt wird. Dieser Kraftstoff stammt aus einem nicht dargestellten Tank, aus dem über eine Zuführleitung 22, eine Hochdruckpumpe 23 und ein Rückschlagventil 24 der Kraftstoff der Düse 21 zugeführt wird. Gleichzeitig wird in die Kammer 20 Sauerstoff oder Luft über eine Zuführleitung 25, einen nicht dargestellten Hochdruckverdichter und einen Druckregeler 26 unter Hochdruck in die Kammer 20 geleitet.

Eine Leitung 27, in die die Zuführleitung 25 übergeht, ist doppelfunktional ausgeführt, d. h. sie dient gleichzeitig als Zuleitung für das Gas bzw. die Luft als auch als Ableitung für überschüssiges Gas in der Kammer. Dieses überschüssige Gas wird über eine Ableitung 28 und ein Sicherheitsventil 29 dem nicht dargestellten Kraftstofftank zugeleitet.

Zwischen der Kammer 20 und der Einspritzdüse 18 ist eine Zuführleitung 30 angeordnet, die den mit Sauerstoff angereicherten Kraftstoff aus der Kammer 20 der Einspritzdüse 18 zuführt. Weiter ist eine Einspritzpumpe 31 an der Zuführleitung 30 angeordnet, um den angereicherten Kraftstoff unter Druck zu fördern.

Schließlich weist die Einspritzanlage noch einen Füllstandsgeber 32 auf, der den Kraftstofflevel in der Kammer 20 misst.

Sowohl die Kammer 20 als auch die Zuführleitung 30 werden von einem Kühlsystem 33 gekühlt, wie durch die gestrichelten Linien, die diese Elemente umgeben, angedeutet ist.

Im Folgenden wird nun die Funktionsweise der Einspritzanlage 10 und damit auch das zugrunde liegende Verfahren näher beschrieben und erläutert:

Wichtig bei dem Verfahren der vorliegenden Erfindung ist, dass der Kraftstoff, bevor er über die Einspritzdüse 18 in die Ansaugsammelleitung 17 eingespritzt, d. h. zerstäubt wird, vorher mit Gas, hier Sauerstoff, oder Luft angereichert wird, um den nachfolgenden, abschließenden Zerstäubungsvorgang zu optimieren, der in üblicher Weise unmittelbar vor der Verbrennung stattfindet. Diese Anreicherung mit Luft oder Sauerstoff (im Folgenden wird nur noch von Sauerstoff gesprochen) geschieht in der Kammer 20:

Kraftstoff wird über die Hochdruckpumpe 23 (Hochdruckverdichter) der Düse 21 zugeführt, in dieser zerstäubt und mit dem über die Zuführleitung 25, 27 ebenfalls unter Hochdruck, insbesondere 10 MPa, zuströmenden Sauerstoff vermischt. Die Hochdruckpumpe 23 weist insbesondere ein Druckgefälle von 12,5 MPa auf.

Die Bedingungen sollten dabei insgesamt so gewählt werden, dass eine Selbstzündung des Kraftstoffes ausgeschlossen ist. Der Gasdruck in der Kammer wird mit Hilfe des Druckreglers 26 und des Sicherheitsventils 29 bei einem Druck gehalten, der mindestens 1,2 mal höher ist als der Luftdruck in der Ansaugleitung 17.

Der angereicherte Kraftstoff setzt sich in flüssiger Form am Boden der Kammer 20 ab. Mittels des Füllstandsanzeigers (32) und einer geeigneten Steuerung wird dafür gesorgt, dass die Kraftstoffmenge in der Kammer 20 unabhängig vom jeweiligen, augenblicklichen Verbrauch des Motors immer auf dem Sollstand ist. Dies kann dadurch geschehen, dass die Kraftstoffzerstäubung und die Gaszufuhr durch An- und Abschalten der entsprechenden Pumpen angestoßen bzw. unterbrochen wird. Es sind natürlich noch eine Mehrzahl anderer gleichwertiger Lösungen denkbar.

Der so angereicherte Kraftstoff wird zur endgültigen Zerstäubung der Düse 18 zugeführt, und zwar über die Zuführleitung 30, wobei die Hochdruckpumpe 31 zusätzlich zur Förderung und zur Erzeugung des notwendigen Einspritzdrucks vorgesehen ist. Mittels dieser Düse 18 wird eine optimale Zerstäubung, d. h. Zerkleinerung der Mikro- und Makrotropfen des angereicherten Kraftstoffs erreicht, da der im Kraftstoff befindliche Sauerstoff aus dem angereicherten Kraftstoff austritt und beim Austreten für eine zusätzliche Zerkleinerung der Kraftstofftropfen sorgt.

Der zerstäubte Kraftstoff vermischt sich dann mit der über die Ansaugsammelleitung 17 zuströmenden Luft zu einem brennfähigen Kraftstoff-/Luftgemisch. Dieses Gemisch wird über das Einlassventil 15 in den Brennraum des Zylinders 12, der nach unten von dem Kolben 13 begrenzt wird, geleitet und verbrannt. Das verbrannte Gemisch tritt dann aus dem Auslassventil 16 in die Abgasleitung 19 und wird abgeleitet.

Besonders wichtig ist nun, dass durch die Kühlung der Kammer 20 und der Zuführleitung 30 zum einen eine bessere Anreicherung des Sauerstoffs im Kraftstoff erreicht wird, zum anderen ein vorzeitiges Entgasen des Kraftstoffs, d. h. ein Austreten des Sauerstoffs vor dem abschließenden Zerstäuben verhindert wird. Das Entgasen findet auf Grund der Kühlung, die den angereicherten Kraftstoff vorzugsweise auf einer Temperatur von 1 bis 3 °C hält, dann fast vollständig erst beim Einspritzvorgang, nämlich beim Zerstäuben mittels der Düse 18 statt. Durch die Kühlung des angereicherten Kraftstoffs ergeben sich noch weitere Effekte, die sich positiv auf den Kraftstoffverbrauch auswirken.

Testfahrten mit einem Serienwagen "Ford-Mondeo" mit dem 2-Liter Benzinmotor "Zetek", der mit der oben beschriebenen Einspritzanlage ausgestattet wurde, zeigten folgende Ergebnisse:

Bei einer Laufzeit von 125.000 km mit einer Nutzbelastung von 180 - 300 kg wurde im Vergleich zum Serienwagen folgende Wirtschaftlichkeitssteigerung erzielt (die Wagenprüfungen wurden im Diagnostikprüfstand AP500112 K4000 durchgeführt):

Im kalten Zustand steigerte sich die Motorwirtschaftlichkeit um 18,6 % bei einer Minderung des Kohlenstoffoxidgehalts um 5,6 %. Im warmen Zustand ergeben sich Werte von 14,8 % bzw. 6,5 %

Es wird darauf hingewiesen, dass es natürlich im Rahmen der Erfindung liegt, verschiedenste Motorarten mit der erfindungsgemäßen Einspritzanlage bzw. dem Einspritzverfahren auszustatten. So können u.a. sowohl Diesel- als auch Benzinmotoren verwendet werden, mit einem oder mehreren Zylindern, mit direkter oder indirekter Einspritzung und den verschiedensten zusätzlichen Steuerungsverfahren für die Einspritzung.

### Bezugszeichenliste

- 10: Einspritzanlage
- 11: Verbrennungsbereich
- 12: Zylinder
- 13: Kolben
- 14: Pleuelstange
- 15: Einlassventil
- 16: Auslassventil
- 17: Ansaugsammelleitung
- 18: Düse
- 19: Abgasleitung
- 20: Kammer
- 21: Düse
- 22: Zuführleitung
- 23: Hochdruckpumpe
- 24: Rückschlagventil
- 25: Zuführleitung
- 26: Druckregler
- 27: Zuführ- und Abführleitung
- 28: Ableitung
- 29: Sicherheitsventil
- 30: Zuführleitung
- 31: Einspritzpumpe
- 32: Füllstandsgeber
- 33: Kühlung
- 34: Zündkerze

## Patentansprüche

1. Verfahren zum Einspritzen von Kraftstoff in einen Verbrennungsmotor, wobei der Kraftstoff zunächst in einer Gasanreicherungsvorrichtung (20) mit einem Gas oder Gasgemisch, insbesondere Sauerstoff oder Luft, angereichert wird, indem der Kraftstoff zerstäubt wird und das Gas/Gasgemisch dem zerstäubten Kraftstoff zugeführt wird, wobei anschließend der angereicherte Kraftstoff direkt in zumindest einen Zylinder (12) oder indirekt in einen vorgelagerten Bereich (17), insbesondere in den Ansaugtrakt des Motors im Wege einer abschließenden Zerstäubung eingespritzt wird, **dadurch gekennzeichnet, dass** der Kraftstoff zumindest im angereicherten Zustand bis zum abschließenden Zerstäuben gekühlt wird, sodass einem Austritt des Gas/Gasgemischs aus dem Kraftstoff vor diesem abschließenden Zerstäuben entgegengewirkt wird.

2. Verfahren gemäß Anspruch 1, **dadurch gekennzeichnet, dass** die Temperatur des angereicherten Kraftstoffs beim abschließenden Zerstäuben 1 bis 10 °C, vorteilhaft 1 bis 3 °C beträgt.

3. Verfahren gemäß Anspruch 1, **dadurch gekennzeichnet, dass** die Temperatur des angereicherten Kraftstoffs von der Gasanreicherungsvorrichtung bis zum abschließenden Zerstäuben 1 bis 10 °C, vorteilhaft 1 bis 3 °C beträgt.

4. Verfahren gemäß Anspruch 1, **dadurch gekennzeichnet, dass** der Gasdruck des Gases/Gasgemischs beim Anreichern des Kraftstoffs höher ist als der Luftdruck im vorgelagerten Bereich bzw. im Zylinder beim abschließenden Zerstäubungsvorgang.

5. Verfahren gemäß Anspruch 4, **dadurch gekennzeichnet, dass** der Gasdruck 1,2-50 mal so hoch ist wie der Luftdruck im vorgelagerten Bereich bzw. im Zylinder beim endgültigen Einspritzvorgang.

6. Einspritzanlage für einen Verbrennungsmotor zur Durchführung des Verfahren gemäß zumindest Anspruch 1, mit einer Gasanreicherungsvorrichtung zur Anreicherung von. Kraftstoff mit einem Gas oder einem Gasgemisch, insbesondere Sauerstoff oder Luft, wobei die Gasanreicherungsvorrichtung einen Anreicherungsraum (20) aufweist zur Anreicherung von Kraftstoff mit einem Gas oder einem Gasgemisch, mit zumindest einem Zerstäubungsmittel (21) sowie zumindest einer Öffnung für einen Gaseinlass in den Anreicherungsraum (20), mit einem ersten Pumpmittel (23) zum Zuführen des Kraftstoffs und einem zweiten Pumpmittel zum Zuführen des Gas/Gasgemischs in den Anreicherungsraum (20), mit einer Zuführleitung (30) zum Leiten des angereicherten Kraftstoffs von dem Anreicherungsraum (20) zu einem Endzerstäubungsmittel (18), wobei das Endzerstäubungsmittel (18) zum nachfolgenden, direkten oder indirekten Einspritzen des angereicherten Kraftstoffs in einen Zylinder (12) oder einen vorgelagerten Bereich, insbesondere einen Ansaugtrakt (17), vorgesehen ist, **dadurch gekennzeichnet, dass** ein Kühlsystem (33) vorgesehen ist, derart, dass zumindest der angereicherte Kraftstoff bis zum abschließenden Zerstäuben im Endzerstäubungsmittel (18) gekühlt ist, sodass einem Austritt des Gas/Gasgemischs aus dem Kraftstoff vor diesem abschließenden Zerstäuben entgegengewirkt wird.

7. Einspritzanlage gemäß Anspruch 6, **dadurch gekennzeichnet, dass** das Kühlsystem (33) so ausgebildet ist, dass der Anreicherungsraum (20), und die Zuführleitung (30) gekühlt sind.

8. Einspritzanlage gemäß Anspruch 6, **dadurch gekennzeichnet, dass** der Anreicherungsraum (20) eine abgeschlossene Kammer (20) ist, die zumindest einen Einlass, insbesondere Einlassventil aufweist, über den das Gas oder Gasgemisch zuführbar ist und mindestens eine Düse (21), durch die der Kraftstoff in die Kammer (20) einspritzbar, insbesondere zerstäubbar ist.

9. Einspritzanlage gemäß Anspruch 8, **dadurch gekennzeichnet, dass** Druckregelungsmittel vorgesehen sind, sodass das Gas/Gasgemisch und/oder der Kraftstoff unter kontrolliertem Druck in die Kammer (20) einleitbar ist und sodass der Druck in der Kammer unter einem kontrollierten Druck gehalten werden kann.

10. Einspritzanlage gemäß einem der Ansprüche 8 oder 9, **dadurch gekennzeichnet, dass** ein Füllstandsgeber (32) vorgesehen ist, der die Menge des in der Kammer (20) befindlichen, angereicherten Kraftstoffs misst.

## Claims

1. Method for injecting fuel into an internal combustion engine, the fuel initially being enriched with a gas or gas mixture, in particular oxygen or air, in a gas enrichment device (20) by the fuel being sprayed and the gas or gas mixture being supplied to the sprayed fuel, the enriched fuel then being injected directly into at least one cylinder (12) or indirectly into an upstream area (17), in particular into the intake manifold of the engine, in the course of a final spraying process, **characterised in that** the fuel is cooled at least in the enriched state until the final spraying process to counteract any escape of the gas or gas mixture from the fuel prior to said final spraying process.

2. Method according to claim 1, **characterised in that** the temperature of the enriched fuel at the time of the final spraying process is 1 to 10 °C, preferably 1 to 3 °C.

3. Method according to claim 1, **characterised in that** the temperature of the enriched fuel from the gas enrichment device to the final spraying process is I to 10 °C, preferably 1 to 3 °C.

4. Method according to claim 1, **characterised in that** the gas pressure of the gas or gas mixture at the time of fuel enrichment is higher than the air pressure in the upstream area or in the cylinder during the final spraying operation.

5. Method according to claim 4, **characterised in that** the gas pressure is 1.2-50 times as high as the air pressure in the upstream area or in the cylinder during the final injection operation.

6. Injection system for an internal combustion engine for carrying out the method according to at least claim 1, having a gas enrichment device for enriching fuel with a gas or a gas mixture, in particular oxygen or air, the gas enrichment device having an enrichment space (20) for enriching fuel with a gas or a gas mixture, having at least one spray means (21) and also having at least one opening for a gas inlet into the enrichment space (20), having a first pump means (23) for supplying the fuel and having a second pump means for supplying the gas or gas mixture into the enrichment space (20), having a supply line (30) for conveying the enriched fuel from the enrichment space (20) to a final spray means (18), the final spray means (18) being provided for the following direct or indirect injection of the enriched fuel into a cylinder (12) or into an upstream area, in particular an intake manifold (17), **characterised in that** a cooling system (33) is provided such that at least the enriched fuel is cooled until the final spraying process in the final spray means (18), so that escape of the gas or gas mixture from the fuel is counteracted prior to said final spraying process.

7. Injection system according to claim 6, **characterised in that** the cooling system (33) is designed such that the enrichment space (20) and the supply line (30) are cooled.

8. Injection system according to claim 6, **characterised in that** the enrichment space (20) is a closed chamber (20) which has at least one inlet, in particular an inlet valve, by means of which the gas or gas mixture can be supplied, and has at least one nozzle (21) through which the fuel can be injected, in particular sprayed, into the chamber (20).

9. Injection system according to claim 8, **characterised in that** pressure regulating means are provided so that the gas or gas mixture and/or the fuel can be conveyed into the chamber (20) under controlled pressure and so that the pressure in the chamber can be maintained at a controlled pressure.

10. Injection system according to one of claims 8 or 9, **characterised in that** there is provided a liquid level sensor (32) which measures the quantity of enriched fuel in the chamber (20).

## Revendications

1. Procédé pour injecter du carburant dans un moteur à explosion, le carburant étant tout d'abord enrichi avec un gaz ou un mélange gazeux, notamment de l'oxygène ou de l'air, dans un dispositif d'enrichissement en gaz (20), et ce en pulvérisant le carburant et en amenant le gaz/mélange gazeux au carburant pulvérisé, le carburant enrichi étant ensuite injecté, sous la forme d'une pulvérisation finale, directement dans au moins un cylindre (12) ou indirectement dans une zone en amont de celui-ci (17), notamment dans la zone d'admission du moteur, **caractérisé en ce que** le carburant, au moins à l'état enrichi, est refroidi jusqu'à la pulvérisation finale de sorte à contrecarrer une sortie du gaz/mélange gazeux hors du carburant avant cette pulvérisation finale.

2. Procédé selon la revendication 1, **caractérisé en ce que** la température du carburant enrichi est comprise lors de la pulvérisation finale entre 1 °C et 10 °C, de préférence entre 1 °C et 3 °C.

3. Procédé selon la revendication 1, **caractérisé en ce que** la température du carburant enrichi depuis le dispositif d'enrichissement jusqu'au pulvérisateur final est comprise entre 1 °C et 10 °C, de préférence entre 1 °C et 3 °C.

4. Procédé selon la revendication 1, **caractérisé en ce que** la pression du gaz/mélange gazeux lors de l'enrichissement du carburant est supérieure à la pression de l'air régnant dans la zone amont ou dans le cylindre lors de la procédure de pulvérisation finale.

5. Procédé selon la revendication 4, **caractérisé en ce que** la pression du gaz est 1,2 à 50 fois plus élevée que la pression de l'air dans la zone en amont ou dans le cylindre lors de la procédure d'injection finale.

6. Dispositif d'injection pour un moteur à explosion pour la mise en oeuvre du procédé selon la revendication 1 au moins, avec un dispositif d'enrichissement en gaz pour enrichir le carburant avec un gaz ou un mélange gazeux, notamment de l'oxygène ou de l'air, le dispositif d'enrichissement en gaz présentant une chambre d'enrichissement (20) pour enrichir le carburant avec un gaz ou un mélange gazeux, avec au moins un moyen de pulvérisation (21) ainsi qu'au moins une ouverture pour une entrée de gaz dans la chambre d'enrichissement (20), avec un premier moyen de pompage (23) pour l'amenée du carburant et un deuxième moyen de pompage pour l'amenée de gaz/mélange gazeux dans la chambre d'enrichissement (20), avec un conduite d'alimentation (30) pour transporter le carburant enrichi de la chambre d'enrichissement (20) à un moyen de pulvérisation final (18), le moyen de pulvérisation final (18) est prévu pour l'injection qui suit directe ou indirecte du carburant enrichi dans un cylindre (12) ou une zone située en amont de celui-ci, notamment une zone d'admission (17), **caractérisé en ce qu'**un système de refroidissement (33) de telle sorte qu'au moins le carburant enrichi est refroidi jusqu'à la pulvérisation finale dans le moyen de pulvérisation final (18), de telle sorte qu'une sortie du gaz/mélange gazeux hors du carburant avant cette pulvérisation finale est contrecarrée.

7. Dispositif d'injection selon la revendication 6, **caractérisé en ce que** le système de refroidissement (33) est conçu de telle sorte que la chambre d'enrichissement (20) et la conduite d'alimentation (30) sont refroidies.

8. Dispositif d'injection selon la revendication 6, **caractérisé en ce que** la chambre d'enrichissement (20) est une chambre fermée (20) qui présente au moins une entrée, notamment une soupape d'entrée, au travers de laquelle le gaz ou le mélange gazeux peut être introduit et au moins une buse (21) à travers laquelle le carburant peut être injecté, notamment pulvérisé, dans la chambre (20).

9. Dispositif d'injection selon la revendication 8, **caractérisé en ce que** des moyens de régulation de la pression sont prévus de sorte que le gaz/mélange gazeux et/ou le carburant peuvent être introduits dans la chambre (20) sous une pression contrôlée, et de sorte que la pression dans la chambre peut être maintenue sous une pression contrôlée.

10. Dispositif d'injection selon la revendication 8 ou 9, **caractérisé en ce qu'**il est prévu un indicateur de niveau (32) qui mesure la quantité de carburant enrichi se trouvant dans la chambre (20)
